# EUROPEAN PATENT APPLICATION

(11) **EP 3 561 164 A1**
(43) Date of publication of application: **30.10.2019**
(21) Application number: 18900566.3
(22) Date of filing: 05.02.2018
(51) Int. Cl.: D04B 21/04

(54) **ULTRAFINE FIBER FABRIC AND MANUFACTURING PROCESS THEREFOR**

(71) Applicant: Zhejiang meisheng new materials co., LTD, Binhai industrial zone, keqiao district Shaoxing City Zhejiang 312030 (CN)
(72) Inventor: The designation of the inventor has not yet been filed
(74) Representative: Vitina, Maruta
(86) International application number: PCT/CN2018/075239
(87) International publication number: WO 2019/148487

(57) **Abstract**

The present invention relates to high-grade textile fabrics, and discloses a microfiber fabric and a method for making the same. The microfiber fabric includes a base portion and a surface portion. The base portion is composed of figured sea-island filaments and/or ordinary filaments and the surface portion is composed of short fibers. The fabric has a nonwoven structure which is formed by felting the base portion and the surface portion. The method for making such fabric includes the following steps: subjecting a base portion of figured sea-island filaments and/or high-strength polyester filaments to weft-knitting, warp-knitting or weaving, and napping to form a napped layer on a surface of the base portion; laying short fibers on the napped layer; generating a felted nonwoven structure between the short fibers and the napped layer using a nonwoven felting technique; and subjecting the felted nonwoven structure to impregnation, drying, fiber opening, dyeing and post-treatment to produce the microfiber fabric. This invention fills in the blank where there is no needle-punched nonwoven fabric with a thickness of 0.5 mm or less, but also provides a product with desirable double-color effect, high-grade quality and elegant appearance.

## Description

### TECHNICAL FIELD

This application relates to high-grade textile fabrics, and more particularly to a microfiber fabric and a method for making the same.

### BACKGROUND

Microfiber is short for microfiber PU synthetic leather, and includes sea-island microfiber which is divided into two categories: sea-island filament and sea-island short fiber (including figured sea-island and un-figured sea-island fibers). The sea-island filament is generally woven and knitted to produce suede fabrics, which are used in the production of clothing and garments. While the sea-island short fiber is generally used to produce thickened imitation leather fabrics, which are applied in the manufacturing of shoes, sofa, automotive interiors and garments. An ultimate object for the microfiber fabric processing is to obtain the high-emulation leather, and compared to the un-figured sea-island microfiber fabrics, the figured sea-island microfiber fabrics undergoing fiber opening by alkali-deweighting treatment are more safe and environmentally friendly.

Ordinary microfiber needle-punched non-woven fabrics are generally produced from ultrafine short staples through unpacking, bin mixing, carding, lapping, needle-punching, etc. However, such process involves expensive equipment, high requirement for the production conditions, high energy consumption and low yield. In addition, there is difficulty in controlling the average thickness and weight of fabrics, which brings problem to the subsequent resin impregnation and dyeing process. The produced fabrics are greatly limited in thickness, and specifically the process can generally only form grey fabrics with a moderate thickness of 0.5-2.0 mm but without specification for elasticity, and cannot produce grey fabrics having a thickness of 0.5 mm or less and with specification for elasticity. Some manufactories firstly produce the grey fabrics with a thickness of 1.2 mm or more, which are then subjected to cutting and splitting along their transverse thicknesses to obtain the products with a thickness of 0.5 mm or less. However, there exists a defect that after the entangled fibers are cut, the fabrics are significantly reduced in strength, affecting their subsequent applications.

Therefore, there is a need to develop a microfiber fabric and a method for making the same.

### SUMMARY

An object of the application is to provide a microfiber fabric with high strength and small thickness and a method for making the same to overcome the defects in the prior art.

In order to fill in the blanks in which there is no microfiber fabrics with a thickness of 0.5 mm or less, microfiber filaments are used herein to produce grey fabrics having such a thickness and elasticity through knitting, napping and needling, which are then subjected to post-treatments including resin impregnation, fiber opening, dyeing and sanding. It is suitable for the applications such as automotive interiors, clothing, etc.

A microfiber fabric comprises a base portion and a surface portion, wherein the base portion comprises figured sea-island filaments and/or ordinary filaments, and the surface portion is composed of short fibers; and the microfiber fabric has a nonwoven structure which is formed by the felting of the base portion and the surface portion.

In an embodiment, the base portion further comprises high-strength polyester filaments with a denier of 75-100 D.

In an embodiment, the figured sea-island filaments are polyester sea-island filaments and/or nylon sea-island filaments with a denier of 75-150 D; the ordinary filaments are polyester filaments and/or nylon filaments with a denier of 50-200 D; and the short fibers are polyester sea-island short fibers and/or nylon sea-island short fibers.

A finished product of the microfiber fabric has a thickness of 0.5 mm or less.

A method for manufacturing a microfiber fabric comprises the following steps: subjecting a base portion of figured sea-island filaments and/or high-strength polyester filaments to weft-knitting, warp-knitting or weaving, and napping to form a napped layer on a surface of the base portion; laying a short fiber on the napped layer; generating a felted nonwoven structure between the short fiber and the napped layer using a nonwoven felting technique; and subjecting the felted nonwoven structure to impregnation, drying, fiber opening, dyeing and post-treatment to produce the microfiber fabric;
wherein the method specifically comprises the following steps:
(1) weaving a grey fabric, with a terry-knitting machine, by weft-knitting the figured sea-island filaments and/or ordinary filaments as main materials to which high-strength polyester filaments of 75-100D are added;
(2) napping the grey fabric;
(3) lapping the napped product;
(4) needle-punching the lapped product;
(5) preshrinking the needle-punched product by a cylinder;
(6) subjecting the preshrunk product to a first drying and a first shaping;
(7) impregnating the shaped product;
(8) subjecting the impregnated product to alkali-deweighting fiber opening;
(9) subjecting the fiber-opened product to a second drying and a second shaping;
(10) subjecting the product obtained in step (9) to a first sanding;
(11) dyeing the product obtained in step (10);
(12) subjecting the dyed product to a third drying and a third shaping;
(13) subjecting the product obtained in step (12) to a second sanding;
(14) subjecting the product obtained in step (13) to a forth drying and a forth shaping; and
(15) subjecting the product obtained in step (14) to inspection, curling and storage.

In step (1), a height of a loop is controlled to 0.2-0.3 cm; a weight of the grey fabric is controlled to 200-300 g/m²; and a width of the grey fabric is controlled to 170-200 cm.

In step (2), the grey fabric is napped four times by a napping machine to a nap length of 0.5-2.5 cm.

In step (3), the napped product is lapped uniformly with 1-3 layers of nonwoven needle-punched fibers (i.e., short fibers) using a lapping machine; wherein a fabric weight of each layer is 10-20 g and a speed of the lapping machine is 0.3-0.5 m/min.

In step (4), the lapped product is needle-punched 4 times or more using a needling machine followed by nonwoven needle-punching and fiber entanglement to produce a composite base fabric; wherein a load for the nonwoven needle-punching is 6 kg; a frequency of the needling machine is controlled to 500-900 needling/min; a density of needle arrangement on a needle plate is 7500 needles/m²; and the composite base fabric has a thickness of 0.45-1.0 mm, a fabric weight of 250-350 g/m² and a width of 170-200 cm.

In step (5), the composite base fabric is preshrunk by a cylinder at a temperature of 130-180°C for 30-60 min. The preshrinking can further improve the density of the fabric, reduce the use of waterborne polyurethane and improve the resilience and hand feeling.

In step (6), in the first drying and the first shaping, the preshrunk composite base fabric is dried in a movement of a shaping machine followed by edge cutting to control a width; wherein a drying temperature is 110-130°C; and the temperature and the speed are adjusted according to the density of the grey fabric during the drying to ensure the complete drying of an inside and outside of the grey fabric.

In step (7), the shaped composite base fabric is impregnated in a mixture of a resin and waterborne polyurethane; wherein the impregnation comprises a first impregnation and a second impregnation; for the first impregnation, a first impregnating solution is 10%-17% waterborne resin, a speed is 5-7 m/min, a liquid entrainment rate is 120%-130%, and a pressure of a pressure roller is adjusted to 0.5 MPa to ensure that a weight of the composite base fabric is increased by 10%±2%; and for the second impregnation, a second impregnating solution is 12%-20% waterborne polyurethane, a speed is 7-8 m/min, a liquid entrainment rate is 120%-130, and a pressure of a pressure roller is adjusted to 0.5 MPa to ensure that the weight of the composite base fabric is increased by 8%±2%.

In step (8), in the alkali-deweighting fiber opening, a concentration of an alkali solution is 5%; a heating rate is 5°C/min; a temperature at a high-temperature zone is 96-110°C; a fiber-opening time is 45-60 min; and a fiber-opening rate is 18%-35%. After the fiber opening is completed, the composite base fabric is adjusted to pH 6-7 with citric acid for neutralization and washed with water in a continuous countercurrent manner after removed from a vat.

In step (9), after treated by the impregnation and the alkali-deweighting fiber opening, the composite base fabric is subjected to the second drying and the second shaping for sanding.

In step (10), the composite base fabric is sanded to improve the unevenness of the surface caused by the fiber opening, thereby facilitating the uniform coloring.

In step (11), after sewed, the composite base fabric is subjected to dyeing in a vat, reduction clearing, dewatering and shaping. An initial-dyeing temperature of a disperse dye is controlled to within a range from room temperature to 60°C. After 1 h, the temperature is gradually increased to 130°C and kept for 1-2 h. Then the composite base fabric is fully washed with water and subjected to the reduction clearing when dyed in deep shade.

The disperse dye is prepared by a high-temperature levelling agent, a diffusing agent and a 98 wt% acetic acid, where a dosage of the high-temperature levelling agent is 0.2-1.2 g/L; a dosage of the diffusing agent is 0.5-1 g/L; and a dosage of acetic acid is 0.5-1.5. In the reduction clearing, a dosage of caustic soda is 6 mL/L; a dosage of sodium hydrosulfite is 2.5 g/L; and a dosage of a dispersant is 0.1-0.5 g/L.

In step (12), after the reduction clearing is completed, the composite base fabric is subjected to the third drying and the third shaping. During the shaping, a temperature of the composite base fabric is 100-170°C, and an operating speed is adjusted to 5-30 m/min, and the speed is 30-60 m/min.

In step (13), the composite base fabric is subjected to the second sanding. A qualified conventional product should have piles of uniform length and no flaws on the fabric surface. If there is a requirement for writing on the fabric surface, it can be met by retaining the length of the piles.

In step (14), in the forth drying and shaping, the composite base fabric is shaped according to the requirements.

In step (15), the product is subjected to inspection, curling and storage.

The application has the following technical effects.
(1) This application can manufacture a product with a thickness of 0.5 mm or less to fill in the blanks about thickness specification in the normal production (free of the mechanical splitting) of needle-punched nonwoven fabrics.
(2) This application can select a fiber different from the grey fabric in properties during the lapping to enable the full entanglement between the lapped fiber and the grey fabric fiber, for example, using a polyester filament in the knitting and a nylon short fiber in the lapping. In addition, since only the disperse dye is added in the dyeing and the disperse dye fails to color the nylon short fiber, a double-color effect of white and any one of other colors is generated on the fabric surface, which enriches the apparent color of the fabric. Therefore, this application can provide the finished product not only with the double-color effect, but also with high-grade quality and elegant appearance.
(3) The fabric prepared by a 75-100 D high-strength polyester filament, a 75-250 D figured sea-island filament and a 10 D nylon short fiber through the above process has improved physical properties when compared to the needle-punched nonwoven fabric of the same thickness.
(4) The grey fabric structure of the invention has a good resilience. Moreover, the addition of a conventional waterborne resin and a waterborne polyurethane in an amount of 50% can not only provide the fabric with leather feeling, but also enable an elastic extension of 10%-30%, allowing the fabric for a higher emulation than the ordinary chemical fiber fabric and a better resilience than the natural leather. Therefore, the fabric of this invention has a wider range of applications and can be applied to the high-grade fabrics with requirements for elastic extension, such as automotive interiors and women's spring and autumn fashions, becoming more competitive in the market.
(5) The fabric of this invention not only retains the drapability of the kitted fabric, but also improves the water vapor permeability through the introduction ultrafine short fiber by needle-punching, suitable for the production of various kinds of clothing. Moreover, the fabric is improved in density by needle-punching lapping so that it has a better sound insulation, and is applicable to the decorative materials for automotive and household interiors.
(6) As Compared to the traditional needle-punching nonwoven fabric production, the invention has the following advantages for the same specifications. For example, the equipment investment and the raw material cost are reduced by 3/5 and 1/5, respectively; in the case of basically the same energy consumption, the yield is increased by 2 times; the CV value is easy to control and the high-quality and high-efficiency mass production is achieved; and the materials and process are all environmentally friendly.

### DETAILED DESCRIPTION OF EMBODIMENTS

The invention will be described in detail with reference to the following embodiments to make the technical solutions and effects more apparent and complete, but these embodiments are not intended to limit the invention.

### Example 1

Raw materials of a microfiber fabric in this example were selected from any one of the following combinations.
Combination 1: a base portion made from 75 D polyester sea-island filaments and 75 D high-strength polyester filaments, and a surface portion made from polyester sea-island short fibers.
Combination 2: a base portion made from 75 D nylon sea-island filaments and 75 D high-strength polyester filaments, and a surface portion made from polyester sea-island short fibers.
Combination 3: a base portion made from 75 D polyester sea-island filaments, 50 D polyester filaments and 75 D high-strength polyester filaments, and a surface portion made from polyester sea-island short fibers.
Combination 4: a base portion made from 75 D polyester sea-island filaments and 75 D high-strength polyester filaments, and a surface portion made from nylon sea-island short fibers.
Combination 5: a base portion made from 75 D nylon sea-island filaments and 75 D high-strength polyester filaments, and a surface portion made from nylon sea-island short fibers.
Combination 6: a base portion made from 75 D polyester sea-island filaments, 50 D nylon filaments and 75 D high-strength polyester filaments, and a surface portion made from nylon sea-island short fibers.
Combination 7: a base portion made from 75 D polyester sea-island filaments and 75 D high-strength polyester filaments, and a surface portion made from nylon sea-island short fibers and polyester sea-island short fibers.
Combination 8: a base portion made from 75 D nylon sea-island filaments and 75 D high-strength polyester filaments, and a surface portion made from nylon sea-island short fibers and polyester sea-island short fibers.
Combination 9: a base portion made from 75 D polyester sea-island filaments, 75 D nylon sea-island filaments and 75 D high-strength polyester filaments, and a surface portion made from nylon sea-island short fibers and polyester sea-island short fibers.
Combination 10: a base portion made from 50 D polyester filaments and 75 D high-strength polyester filaments, and a surface portion made from polyester sea-island short fibers.
Combination 11: a base portion made from 50 D nylon filaments and 75 D high-strength polyester filaments, and a surface portion made from polyester sea-island short fibers.
Combination 12: a base portion made from 50 D polyester filaments, 50 D nylon filaments and 75 D high-strength polyester filaments, and a surface portion made from polyester sea-island short fibers.
Combination 13: a base portion made from 50 D polyester filaments and 75 D high-strength polyester filament, and a surface portion made from nylon sea-island short fibers.
Combination 14: a base portion made from 50 D nylon filaments and 75 D high-strength polyester filaments, and a surface portion made from nylon sea-island short fibers.
Combination 15: a base portion made from 50 D polyester filaments, 75 D nylon sea-island filaments and 75 D high-strength polyester filaments, and a surface portion made from nylon sea-island short fibers.
Combination 16: a base portion made from 50 D polyester filaments and 75 D high-strength polyester filaments, and a surface portion made from nylon sea-island short fibers and polyester sea-island short fibers.
Combination 17: a base portion made from 50 D nylon filaments and 75 D high-strength polyester filaments, and a surface portion made from nylon sea-island short fibers and polyester sea-island short fibers.
Combination 18: a base portion made from 50 D nylon filaments, 75 D nylon sea-island filaments and 75 D high-strength polyester filaments, and a surface portion made from nylon sea-island short fibers and polyester sea-island short fibers.

The microfiber fabric described above was manufactured by a method including the following steps.
(1) Figured sea-island filaments and/or ordinary filaments were used as main materials to which high-strength polyester filaments added, knitted by a 24-pin and 34-inch terry-kitting machine and weft-knitted to produce a grey fabric.
(2) The grey fabric was napped.
(3) The napped product obtained in step (2) was lapped.
(4) The lapped product obtained in step (3) was needle-punched.
(5) The needle-punched product obtained in step (4) was preshrunk by a cylinder.
(6) The preshrunk product was subjected to a first drying and a first shaping.
(7) The shaped product obtained in step (6) was impregnated.
(8) The impregnated product was subjected to alkali-deweighting fiber opening.
(9) The fiber-opened product obtained in step (8) was subjected to a second drying and a second shaping.
(10) The product obtained in step (9) was subjected to a first sanding.
(11) The product obtained in step (10) was dyed.
(12) The dyed product was subjected to a third drying and a third shaping.
(13) The product obtained in step (12) was subjected to a second sanding.
(14) The product obtained in step (13) was subjected to a forth drying and a forth shaping.
(15) The product obtained in step (14) was subjected to inspection, curling and storage.

In step (2), the grey fabric was napped four times by a 24-roller powerful napping machine and a fabric weight of the napped product was 200-300 g/m².

In step (3), the napped product was lapped uniformly with 1 layer of nonwoven needle-punched fibers using a lapping machine, where a speed of the lapping machine was 0.3 m/min.

In step (4), the lapped product was needle-punched 4 times or more using a needling machine to produce a composite base fabric, where a load for the nonwoven needle-punching was 6 kg; a frequency of the needling machine was 500 needling/min; a density of needle arrangement on a needle plate was 7500 needles/m²; and the composite base fabric had a thickness of 0.6 mm and a fabric weight of 250 g/m².

In step (5), the preshrinking was conducted at 130°C for 30 min.

In step (7), the impregnation included a first impregnation and a second impregnation. In the first impregnation, a first impregnating solution was 10% waterborne resin; a speed was 5 m/min; a liquid entrainment rate is 120%, and a pressure of a pressure roller was 0.5 MPa. In the second impregnation, a second impregnating solution was 12% waterborne polyurethane; a speed was 7 m/min; a liquid entrainment rate was 120%, and a pressure of a pressure roller was 0.5 MPa.

In step (11), after sewed, the product obtained in step (10) was subjected to dyeing in a vat, reduction clearing, dewatering and shaping. An initial-dyeing temperature was 50°C, and 1 h later, the temperature was gradually increased to 130°C and kept for 1 h. Then the product was fully washed with water and subjected to the reduction clearing when dyed in deep shade.

The finished product obtained in this example had a fabric weight of 280-290 g/m² and a thickness of 0.50 mm.

### Example 2

Raw materials of a microfiber fabric in this example were selected from any one of the following combinations.
Combination 1: a base portion made from 110 D polyester sea-island filaments and 85 D high-strength polyester filaments, and a surface portion made from polyester sea-island short fibers.
Combination 2: a base portion made from 110 D nylon sea-island filaments and 85 D high-strength polyester filaments, and a surface portion made from polyester sea-island short fibers.
Combination 3: a base portion made from 110 D polyester sea-island filaments, 125 D polyester filaments and 85 D high-strength polyester filaments, and a surface portion made from polyester sea-island short fibers.
Combination 4: a base portion made from 110 D polyester sea-island filaments and 85 D high-strength polyester filaments, and a surface portion made from nylon sea-island short fibers.
Combination 5: a base portion made from 110 D nylon sea-island filaments and 85 D high-strength polyester filaments, and a surface portion made from nylon sea-island short fibers.
Combination 6: a base portion made from 110 D polyester sea-island filaments, 125 D nylon filaments and 85 D high-strength polyester filaments, and a surface portion made from nylon sea-island short fibers.
Combination 7: a base portion made from 110 D polyester sea-island filaments and 85 D high-strength polyester filaments, and a surface portion made from nylon sea-island short fibers and polyester sea-island short fibers.
Combination 8: a base portion made from 110 D nylon sea-island filaments and 85 D high-strength polyester filaments, and a surface portion made from nylon sea-island short fibers and polyester sea-island short fibers.
Combination 9: a base portion made from 110 D polyester sea-island filaments, 110 D nylon sea-island filaments and 85 D high-strength polyester filaments, and a surface portion made from nylon sea-island short fibers and polyester sea-island short fibers.
Combination 10: a base portion made from 125 D polyester filaments and 85 D high-strength polyester filaments, and a surface portion made from polyester sea-island short fibers.
Combination 11: a base portion made from 125 D nylon filaments and 85 D high-strength polyester filaments, and a surface portion made from polyester sea-island short fibers.
Combination 12: a base portion made from 125 D polyester filaments, 125 D nylon filaments and 85 D high-strength polyester filaments, and a surface portion made from polyester sea-island short fibers.
Combination 13: a base portion made from 125 D polyester filaments and 85 D high-strength polyester filaments, and a surface portion made from nylon sea-island short fibers.
Combination 14: a base portion made from 125 D nylon filaments and 85 D high-strength polyester filaments, and a surface portion made from nylon sea-island short fibers;
Combination 15: a base portion made from 125 D polyester filaments, 110 D nylon sea-island filaments and 85 D high-strength polyester filaments, and a surface portion made from nylon sea-island short fibers.
Combination 16: a base portion made from 125 D polyester filaments and 85 D high-strength polyester filaments, and a surface portion made from nylon sea-island short fibers and polyester sea-island short fibers.
Combination 17: a base portion made from 125 D nylon filaments and 85 D high-strength polyester filaments, and a surface portion made from nylon sea-island short fibers and polyester sea-island short fibers.
Combination 18: a base portion made from 125 D nylon filaments, 110 D nylon sea-island filaments and 85 D high-strength polyester filaments, and a surface portion made from nylon sea-island short fibers and polyester sea-island short fibers.

The microfiber fabric described above was manufactured by a method including the following steps.
(1) Any one of the combinations mentioned in Examples 1-2 was used as main materials to which 75-100 D high-strength polyester filaments were added, knitted by a 24-pin and 34-inch terry-knitting machine and weft-knitted to produce a grey fabric.
(2) The grey fabric was napped.
(3) The napped product obtained in step (2) was lapped.
(4) The lapped product obtained in step (3) was needle-punched.
(5) The needle-punched product obtained in step (4) was preshrunk by a cylinder.
(6) The preshrunk product was subjected to a first drying and a first shaping.
(7) The shaped product obtained in step (6) was impregnated.
(8) The impregnated product was subjected to alkali-deweighting fiber opening.
(9) The fiber-opened product obtained in step (8) was subjected to a second drying and a second shaping.
(10) The product obtained in step (9) was subjected to a first sanding.
(11) The product obtained in step (10) was dyed.
(12) The dyed product was subjected to a third drying and a third shaping.
(13) The product obtained in step (12) was subjected to a second sanding.
(14) The product obtained in step (13) was subjected to a forth drying and a forth shaping.
(15) The product obtained in step (14) was subjected to inspection, curling and storage.

In step (2), the grey fabric was napped four times by a 24-roller powerful napping machine and a fabric weight of the napped product was 200-300 g/m².

In step (3), the napped product was lapped uniformly with 2 layers of nonwoven needle-punched fibers using a lapping machine, where a speed of the lapping machine was 0.4 m/min.

In step (4), the lapped product was needle-punched 4 times or more using a needling machine to produce a composite base fabric, where a load for the nonwoven needle-punching was 6 kg; a frequency of the needling machine was 700 needling/min; a density of needle arrangement on a needle plate was 7500 needles/m²; and the composite base fabric had a thickness of 0.8 mm and a fabric weight of 300 g/m².

In step (5), the preshrinking was conducted at 150°C for 45 min.

In step (7), the impregnation included a first impregnation and a second impregnation. In the first impregnation, a first impregnating solution was 13% waterborne resin; a speed was 6 m/min; a liquid entrainment rate was 125%, and a pressure of a pressure roller was 0.5 MPa. In the second impregnation, a second impregnating solution was 16% waterborne polyurethane; a speed was 7.5 m/min; a liquid entrainment rate was 125%, and a pressure of a pressure roller was 0.5 MPa.

In step (11), after sewed, the product obtained in step (10) was subjected to dyeing in a vat, reduction clearing, dewatering and shaping. An initial-dyeing temperature was 55°C, and 1 h later, the temperature was gradually increased to 130°C and kept for 4.5 h. Then the product was fully washed with water and subjected to the reduction clearing when dyed in deep shade.

The finished product obtained in this example had a fabric weight of 350-360 g/m² and a thickness of 0.48 mm.

### Example 3

Raw materials of a microfiber fabric in this example were selected from any one of the following combinations.
Combination 1: a base portion made from 150 D polyester sea-island filaments and 100 D high-strength polyester filaments, and a surface portion made from polyester sea-island short fibers.
Combination 2: a base portion made from 150 D nylon sea-island filaments and 100 D high-strength polyester filaments, and a surface portion made from polyester sea-island short fibers.
Combination 3: a base portion made from 150 D polyester sea-island filaments, 200 D polyester filaments and 100 D high-strength polyester filaments, and a surface portion made from polyester sea-island short fibers;
Combination 4: a base portion made from 150 D polyester sea-island filaments and 100 D high-strength polyester filaments, and a surface portion made from nylon sea-island short fibers.
Combination 5: a base portion made from 150 D nylon sea-island filaments and 100 D high-strength polyester filaments, and a surface portion made from nylon sea-island short fibers.
Combination 6: a base portion made from 150 D polyester sea-island filaments, and 100 D high-strength polyester filaments, and a surface portion made from nylon sea-island short fibers.
Combination 7: a base portion made from 150 D polyester sea-island filaments and 100 D high-strength polyester filaments, and a surface portion made from nylon sea-island short fibers and polyester sea-island short fibers.
Combination 8: a base portion made from 150 D nylon sea-island filaments and 100 D high-strength polyester filaments, and a surface portion made from nylon sea-island short fibers and polyester sea-island short fibers.
Combination 9: a base portion made from 150 D polyester sea-island filaments, 150 D nylon sea-island filaments and 100 D high-strength polyester filaments, and a surface portion made from nylon sea-island short fibers and polyester sea-island short fibers.
Combination 10: a base portion made from 200 D polyester filaments and 100 D high-strength polyester filaments, and a surface portion made from polyester sea-island short fibers.
Combination 11: a base portion made from 200 D nylon filaments and 100 D high-strength polyester filaments, and a surface portion made from polyester sea-island short fibers.
Combination 12: a base portion made from 200 D polyester filaments, 200 D nylon filaments and 100 D high-strength polyester filaments, and a surface portion made from polyester sea-island short fibers.
Combination 13: a base portion made from 200 D polyester filaments and 100 D high-strength polyester filaments, and a surface portion made from nylon sea-island short fibers.
Combination 14: a base portion made from 200 D nylon filaments and 100 D high-strength polyester filaments, and a surface portion made from nylon sea-island short fibers.
Combination 15: a base portion made from 200 D polyester filaments, 150 D nylon sea-island filaments and 100 D high-strength polyester filaments, and a surface portion made from nylon sea-island short fibers.
Combination 16: a base portion made from 200 D polyester filaments and 100 D high-strength polyester filaments, and a surface portion made from nylon sea-island short fibers and polyester sea-island short fibers.
Combination 17: a base portion made from 200 D nylon filaments and 100 D high-strength polyester filaments, and a surface portion made from nylon sea-island short fibers and polyester sea-island short fibers.
Combination 18: a base portion made from 200 D nylon filaments, 150 D nylon sea-island filaments and 100 D high-strength polyester filaments, and a surface portion made from nylon sea-island short fibers and polyester sea-island short fibers.

The microfiber fabric described above was manufactured by a method including the following steps.
(1) A figured sea-island filament and/or an ordinary filament were/was used as main materials to which 75-100 D high-strength polyester filaments were added, knitted by a 24-pin and 34-inch terry-knitting machine and weft-knitted to produce a grey fabric.
(2) The grey fabric was napped.
(3) The napped product obtained in step (2) was lapped.
(4) The lapped product obtained in step (3) was needle-punched.
(5) The needle-punched product obtained in step (4) was preshrunk by a cylinder.
(6) The preshrunk product was subjected to a first drying and a first shaping.
(7) The shaped product obtained in step (6) was impregnated.
(8) The impregnated product was subjected to alkali-deweighting fiber opening.
(9) The fiber-opened product obtained in step (8) was subjected to a second drying and a second shaping.
(10) The product obtained in step (9) was subjected to a first sanding.
(11) The product obtained in step (10) was dyed.
(12) The dyed product was subjected to a third drying and a third shaping.
(13) The product obtained in step (12) was subjected to a second sanding.
(14) The product obtained in step (13) was subjected to a forth drying and a forth shaping.
(15) The product obtained in step (14) was subjected to inspection, curling and storage.

In step (2), the grey fabric was napped four times by a 24-roller powerful napping machine and a fabric weight of the napped product was 200-300 g/m².

In step (3), the napped product was lapped uniformly with 3 layers of nonwoven needle-punched fibers using a lapping machine, where a speed of the lapping machine was 0.5 m/min.

In step (4), the lapped product was needle-punched 4 times or more using a needling machine to produce a composite base fabric, where a load for the nonwoven needle-punching was 6 kg; a frequency of the needling machine was 900 needling/min; a density of needle arrangement on a needle plate was 7500 needles/m²; and the composite base fabric had a thickness of 1.0 mm and a fabric weight of 350 g/m².

In step (5), the preshrinking was conducted at 180°C for 60 min.

In step (7), the impregnation included a first impregnation and a second impregnation. In the first impregnation, a first impregnating solution was 17% waterborne resin; a speed was 7 m/min; a liquid entrainment rate was 130%, and a pressure of a pressure roller was 0.5 MPa. In the second impregnation, a second impregnating solution was 20% waterborne polyurethane; a speed was 8 m/min; a liquid entrainment rate was 130%, and a pressure of a pressure roller was 0.5 MPa.

In step (11), after sewed, the product obtained in step (10) was subjected to dyeing in a vat, reduction clearing, dewatering and shaping. An initial-dyeing temperature was 60°C, and 1 h later, the temperature was gradually increased to 130°C and kept for 2 h. Then the product was fully washed with water and subjected to the reduction clearing when dyed in deep shade.

The finished product obtained in this example had a fabric weight of 420-430 g/m² and a thickness of 0.50 mm.

Performances of the products manufactured in the above examples were tested and the test methods and results were shown as follows.

### 1. Methods

The air permeability was measured at an air pressure of 125 Pa by Frazir method of ISO 9237.

The tear property was measured by tongue-shaped method of GB/T3917, where a descending rate and an ascending rate were both 500 mm/min; an initial length was 100 mm; an ambient temperature was 25°C; an ambient humidity was 65%; a predetermined extension was 70 mm; a peak amplitude was 5 N; a longitudinal tearing force was 68.1 N; and a latitudinal tearing force was 53.8 N.

### 2. Results

**Table 1 Test results of the microfiber fabrics prepared in Examples 1-3**

| Parameters | | Example 1 | Example 2 | Example 3 |
|---|---|---|---|---|
| Air pemeability (cm³/cm²/s) | | 195 | 193 | 190 |
| Tensile strength (Kg/50mm) | Longitudinal direction | 9.8 | 10.3 | 10.8 |
| | Latitudinal direction | 9.0 | 9.5 | 10.1 |
| Tearing strength (Kg/200^{∗}100mm) | Longitudinal direction | 130.8 | 131.2 | 131.5 |
| | Latitudinal direction | 90.6 | 90.8 | 91.0 |
| Fabric weight (g/m²) | | 285 | 354 | 427 |
| Thickness (mm) | | 0.45 | 0.480 | 0.50 |

It can be seen from Table 1 that the finished products of the invention all had a tensile strength greater than or equal to 600 N and a tearing strength greater than or equal to 50 N, so these products met the requirements of "Polyurethane fascicular microfiber synthetic leather".

The test for color fastness showed the dry and wet rubbing fastness of these products both reached level 4 according to GB 3920-97.

The teat for washing fastness indicated that the products prepared in the examples met the relevant requirements in GB/T 3921.3-1997.

No cracks were observed on the surface of the sample under neutral conditions in the test for hydrolysis resistance. In addition, the longitudinal and latitudinal tensile load of the products both exceeded 400 N/cm; the longitudinal and latitudinal tearing load both exceeded 60 N/cm; and the color fastnesses to dry rubbing, wet rubbing, washing and sunlight all reached level 3-4.

The manufacturing process and the finished product of the invention are environmentally friendly. In addition, the process involves low energy consumption per product and the use of tension-free relaxation, low-temperature fiber-opening and dyeing processes. The invention uses more environmentally-friendly equipments and improves the process by replacing most of the existing chemical reaction with some clean processes such as mechanical and physical measures. Even if in some cases that the chemical process is necessary, green and cleaning materials and methods are applied as much as possible. Therefore, basically no byproducts harmful to the environment are generated in the production. The fabric scrap and the residual wool can be recycled and the generated wastes all reach the discharge standard.

The microfiber fabric of the invention has a thickness of 0.5 mm or less and advantages of large fabric weight, high density, high-emulation leather property and free of odor. Therefore, the microfiber fabric of the invention can be applied to the fields including automotive interiors, high-grade clothing and furniture decorative.

Described above are detailed descriptions to the technical solutions of the invention with reference to the preferred embodiments, and are not intended to limit the invention. It should be understood that those skilled in the art can make various inductions and replacements without departing from the spirit of the invention, which should still fall within the scope of the invention.

## Claims

1. A method for manufacturing a microfiber fabric, comprising:
subjecting a base portion of figured sea-island filaments and/or high-strength polyester filaments to weft-knitting, warp-knitting or weaving, and napping to form a napped layer on a surface of the base portion; laying short fibers on the napped layer; generating, using a nonwoven felting technique, a felted nonwoven structure between the short fibers and the napped layer; and subjecting the felted nonwoven structure to impregnation, drying, fiber opening, dyeing and post-treatment to produce the microfiber fabric;
wherein the method specifically comprises the following steps:
1) weaving a grey fabric by weft-knitting the figured sea-island filaments and/or ordinary filaments as main materials to which high-strength polyester filaments are added; wherein a height of a loop is controlled to 0.2-0.3 cm; a weight of the grey fabric is controlled to 200-300 g/m ; and a width of the grey fabric is controlled to 170-200 cm;
2) napping the grey fabric obtained in step (1) by a napping machine four times to a nap length of 0.5-2.5 cm;
3) lapping the napped fabric obtained in step (2) uniformly with 1-3 layers of nonwoven needle-punched fibers by a lapping machine; wherein a fabric weight of each layer is 10-20 g and a speed of the lapping machine is 0.3-0.5 m/min;
4) needle-punching the lapped fabric obtained in step (3) 4 times or more by a needling machine followed by nonwoven needle-punching and fiber entanglement to produce a composite base fabric; wherein a load for the nonwoven needle-punching is 6 kg; a frequency of the needling machine is controlled to 500-900 needling/min; a density of needle arrangement on a needle plate is 7500 needles/m²; and the composite base fabric has a thickness of 0.45-1.0 mm, a fabric weight of 250-350 g/m² and a width of 170-200 cm;
5) preshrinking: preshrinking the composite base fabric obtained in step (4) by a cylinder to further increase the density of the fabric; wherein a preshrinking temperature is 130-180°C and a preshrinking time is 30-60 min;
6) drying and shaping: drying the preshrunk composite base fabric obtained in step (5) in a movement of a shaping machine followed by edge cutting to control its width; wherein a drying temperature is 110-130°C; and the temperature and speed are adjusted according to the density of the grey fabric during the drying to enabling complete drying of an inside and outside of the grey fabric;
7) impregnation: impregnating the shaped composite base fabric obtained in step (6) in a mixture of a resin and waterborne polyurethane; wherein the impregnation comprises a first impregnation and a second impregnation; for the first impregnation, a first impregnating solution is 10%-17% waterborne resin, a speed is 5-7 m/min, and a liquid entrainment rate is 120%-130%, and a pressure of a pressure roller is adjusted to 0.5 MPa to ensure that weight of the composite base fabric is increased by 10%±2%; and for the second impregnation, a second impregnating solution is 12%-20% waterborne polyurethane, a speed is 7-8 m/min, a liquid entrainment rate is 120%-130%, and a pressure of a pressure roller is adjusted to 0.5 MPa to ensure that a weight of the composite base fabric is increased by 8%±2%;
8) subjecting the impregnated composite base fabric to alkali-deweighting fiber opening, wherein a concentration of an alkali solution is 5%, a heating rate is 5°C/min, a temperature of a high-temperature zone is 96-110°C, a fiber-opening time is 45-60 min, and a fiber-opening rate is 18%-35%; adjusting pH to 6-7 with citric acid for neutralization; and washing the composite base fabric with water in a continuous countercurrent manner after removed from a vat;
9) drying and shaping: drying and shaping the fiber-opened composite base fabric obtained in step (8) for sanding;
10) subjecting the composite base fabric obtained in step (9) to a first sanding;
11) dyeing: sewing the composite base fabric obtained in step (10) followed by dyeing in a vat, reduction clearing, dewatering and shaping; wherein an initial-dyeing temperature of a disperse dye is controlled to within a range from room temperature to 60°C; after 1 h, the temperature is gradually increased to 130°C and kept for 1-2 h; then the composite base fabric is fully washed with water and subjected to the reduction clearing when dyed in deep shade;
12) drying and shaping the dyed composite base fabric obtained in step (11); wherein during the shaping a temperature of the composite base fabric is 100-170°C and an operating speed is adjusted to 5-30 m/min; and the operating speed is 30-60 m/min;
13) subjecting the composite base fabric obtained in step (12) to a second sanding;
14) drying and shaping the composite base fabric obtained in step (13); wherein the shaping is performed according to product requirement; and
15) subjecting the product obtained in step (14) to inspection, curling and storage.

2. The method according to claim 1, **characterized in that** in step (3), one layer of nonwoven needle-punched fibers is uniformly lapped on the napped product obtained in step (2) by the lapping machine, and the speed of the lapping machine is 0.3 m/min;
in step (4), the lapped fabric obtained in step (3) is needle-punched by the needling machine 4 times or more to produce the composite base fabric; and the load for the nonwoven needle-punching is 6 kg; and the frequency of the needling machine is 500 needling/min; and the density of needle arrangement on the needle plate is 7500 needles/m²; and the thickness and the weight of the composite base fabric are 0.6 mm and 250 g/m², respectively;
in step (5), the preshrinking temperature is 130°C and the preshrinking time is 30 min;
in step (7), the impregnation comprises the first impregnation and the second impregnation; for the first impregnation, the first impregnating solution is 10% waterborne resin, the speed is 5 m/min, and the liquid entrainment rate is 120%, and the pressure of the pressure roller is 0.5 MPa; and for the second impregnation, the second impregnating solution is 12% waterborne polyurethane, the speed is 7 m/min, and the liquid entrainment rate is 120%, and the pressure of the pressure roller is 0.5 MPa; and
in step (11), after sewed, the composite base fabric obtained in step (10) is subjected to dyeing in a vat, reduction clearing, dewatering and shaping; the initial-dyeing temperature is 50°C; after 1 h, the temperature is gradually increased to 130°C and kept for 1 h; then the composite base fabric is fully washed with water and subjected to the reduction clearing when dyed in deep shade.

3. The method according to claim 1, **characterized in that** in step (3), two layers of nonwoven needle-punched fibers are uniformly lapped on the napped product obtained in step (2) by the lapping machine and the speed of the lapping machine is 0.4 m/min;
in step (4), the lapped fabric obtained in step (3) is needle-punched by the needling machine 4 times or more to produce the composite base fabric; and the load for the nonwoven needle-punching is 6 kg; and the frequency of the needling machine is 700 needling/min; and the density of needle arrangement on the needle plate is 7500 needles/m²; and the thickness and the weight of the composite base fabric are 0.8 mm and 300 g/m², respectively;
in step (5), the preshrinking temperature is 150°C and the preshrinking time is 45 min;
in step (7), the impregnation comprises the first impregnation and the second impregnation; in the first impregnation, the first impregnating solution is 13% waterborne resin, the speed is 6 m/min, and the liquid entrainment rate is 125%, and the pressure of the pressure roller is 0.5 MPa; for the second impregnation, the second impregnating solution is 16% waterborne polyurethane, the speed is 7.5 m/min, and the liquid entrainment rate is 125%, and the pressure of the pressure roller is 0.5 MPa; and
in step (11), after sewed, the composite base fabric obtained in step (10) is subjected to dyeing in a vat, reduction clearing, dewatering and shaping; the initial-dyeing temperature is 55°C; after 1 h, the temperature is gradually increased to 130°C and kept for 4.5 h; then the composite base fabric is fully washed with water and subjected to the reduction clearing when dyed in deep shade.

4. The method according to claim 1, **characterized in that** in step (3), three layers of nonwoven needle-punched fibers are uniformly lapped on the napped fabric obtained in step (2) by the lapping machine and the speed of the lapping machine is 0.5 m/min;
in step (4), the lapped product obtained in step (3) is needle-punched 4 times or more using the needling machine to produce the composite base fabric; and the load for the nonwoven needle-punching is 6 kg; and the frequency of the needling machine is 900 needling/min; and the density of needle arrangement on the needle plate is 7500 needles/m²; and the thickness and the weight of the composite base fabric are 1.0 mm and 350 g/m², respectively;
in step (5), the preshrinking temperature is 180°C and the preshrinking time is 60 min;
in step (7), the impregnation comprises the first impregnation and the second impregnation; for the first impregnation, the first impregnating solution is 17% waterborne resin, the speed is 7 m/min, the liquid entrainment rate is 130%, and the pressure of the pressure roller is 0.5 MPa; and for the second impregnation, the second impregnating solution is 20% waterborne polyurethane, the speed is 8 m/min, the liquid entrainment rate is 130%, and the pressure of the pressure roller is 0.5 MPa; and
in step (11), after sewed, the composite base fabric obtained in step (10) is subjected to dyeing in a vat, reduction clearing, dewatering and shaping; the initial-dyeing temperature is 60°C; after 1 h, the temperature is gradually increased to 130°C and kept for 2 h; then the composite base fabric is fully washed with water and subjected to the reduction clearing when dyed in deep shade.

5. A micro fiber fabric manufactured by the method of any one of claims 1-4, comprising:
a base portion and a surface portion;
wherein the base portion comprises figured sea-island filaments and/or ordinary filaments and the surface portion is composed of short fibers; and the microfiber fabric has a nonwoven structure which is formed by felting the base portion treated by napping and the surface portion.

6. The microfiber fabric according to claim 5, **characterized in that** the base portion further comprises high-strength polyester filaments with a denier of 75-100 D.

7. The microfiber fabric according to claim 5, **characterized in that** the figured sea-island filaments are polyester sea-island filaments and/or nylon sea-island filaments with a denier of 75-150 D.

8. The microfiber fabric according to claim 5, **characterized in that** the ordinary filaments are polyester filaments and/or nylon filaments with a denier of 50-200 D.

9. The microfiber fabric according to claim 5, **characterized in that** the short fibers are polyester sea-island short fibers and/or nylon sea-island short fibers.

10. The microfiber fabric according to claim 5, **characterized in that** a finished product of the microfiber fabric has a thickness of 0.5 mm or less.
